# EUROPÄISCHE PATENTSCHRIFT

(11) **EP 3 685 059 B1**
(45) Veröffentlichungstag und Bekanntmachung des Hinweises auf die Patenterteilung: **03.11.2021**
(21) Anmeldenummer: 18769119.1
(22) Anmeldetag: 06.09.2018
(51) Int. Cl.: F16C 19/38, F16C 19/36

(54) **SCHRÄGROLLENLAGER**
ANGULAR CONTACT ROLLER BEARING
ROULEMENT À ROULEAUX À CONTACT OBLIQUE

(30) Priorität: 21.09.2017 DE 102017008877
(43) Veröffentlichungstag der Anmeldung: 29.07.2020
(73) Patentinhaber: IMO Holding GmbH, 91350 Gremsdorf (DE)
(72) Erfinder: FRANK, Hubertus, 91315 Hoechstadt (DE); RUSS, Erich, 91350 Gremsdorf (DE)
(74) Vertreter: Schmidt, Steffen J.
(86) Internationale Anmeldenummer: PCT/EP2018/073944
(87) Internationale Veröffentlichungsnummer: WO 2019/057500

(56) Entgegenhaltungen:
- EP-A1- 2 623 805
- EP-A2- 0 756 095
- AT-B- 76 305
- CH-A- 72 303
- DE-C- 607 263
- DE-U- 6 926 219
- DE-U1- 8 713 304
- DE-U1- 8 713 304
- DE-U1-202014 010 876
- DE-U1-202014 010 876
- GB-A- 407 272
- GB-A- 2 199 621
- JP-A- S5 790 416
- JP-A- 2002 013 540
- US-A- 1 224 346
- US-A- 1 418 277
- US-A- 1 552 031
- US-A- 1 970 699
- US-A- 2 055 714

## Beschreibung

### Gegenstand

Ein hier beschriebenes Schrägrollenlager ist ein mehrreihiges, als Großlager ausgeführtes Wälzlager, das zur Lagerung von Wellen dient. Es kann beispielsweise bei Großkraftanlagen, wie bei Windenergieanlagen oder Wasserkraftwerken zum Einsatz kommen.

Als Großlager werden im folgenden Lager bezeichnet, die einen Außenring mit einem Durchmesser von wenigstens einem Meter aufweisen. Es können auch andere Kriterien und insbesondere auch andere Durchmesser-Werte für die Definition von Großlagern herangezogen werden. Entscheidend ist dabei, dass es sich um Lager handelt, die deutlich größer sind als solche, die üblicherweise in Alltagsanwendungen, wie beispielsweise in Personenkraftwagen eingesetzt sind und einen Außendurchmesser von einigen Zentimetern aufweisen.

Bei Großlagern treten Montageaufwand, Reparaturmöglichkeiten usw. in den Vordergrund. So sind beispielsweise Großlager mit einem Innenring und einem Au-βenring bekannt, die in Umfangsrichtung jeweils aus mehreren Segmenten zusammengesetzt sind. Durch die Segmentierung wird beispielsweise erreicht, dass beim Auftreten eines Lagerschadens ein Austausch des Lagers ohne einen Ausbau der gelagerten Welle möglich ist.

### Hintergrund und Stand der Technik

Ein mehrreihiges Wälzlager ist zum Beispiel aus der DE 10 2011 002 913 A1 bekannt, das folgende Merkmalen hat: einen ersten und einen zweiten Lagerring, die in axialer Richtung benachbart und konzentrisch angeordnet sind. Dieser beiden Lagerringe bilden gemeinsam entweder jeweils ein Innenring oder ein Au-βenring des Wälzlagers. Bei mehrreihigen Wälzlagern dieser Art wird zum Beispiel mittels eines seitlich angeschraubten Winkelrings das Lagerspiel oder die Vorspannung entlang des Umfangs des Wälzlagers justiert. Im Bereich mehrreihiger Wälzlager ergibt sich das Problem, dass Kräfte innerhalb des Lagers im Vergleich zu konventionellen Lagern anders geführt und aufgenommen werden müssen. Beispielsweise sind mehrreihige Wälzlager mit mehr als einem Innen- und/oder Außenring hiervon betroffen. Bei diesen müssen die Kräfte und Momente zwischen den einzelnen Bauteilen des Lagers geführt werden. Die Einstellung des optimalen Lagerspiels oder der optimalen Vorspannung ist bei Großlagern personal-und zeitaufwendig und birgt eine hohe Fehlergefahr.

Die US 2,055,714 zeigt ein zweireihiges Schrägrollenlager in einer O-Anordnung mit einem ungeteilten Innenring und einem ungeteilten Außenring bekannt. Die Wälzkörper sind zylinderförmig. Das Verhältnis zwischen der Querabmessung der Wälzkörper und ihrer Länge ist kleiner als 1. Die in den Innenring und den Außenring eingearbeiteten Laufbahnen für die Wälzkörper sind jeweils an einer Seitenflanke offen. Der außenliegende Seitenrand der in den Innenring eingearbeiteten Laufbahn schließt mit der Stirnfläche des Wälzkörpers ab. Entsprechendes gilt für den innenliegenden Seitenrand der in den Außenring eingearbeiteten Laufbahn.

Das aus der DE 69 26 219 U bekannte zweireihige Schrägrollenlager weist einen Innenring auf, dessen Laufbahnen eine Breite aufweisen, die kürzer ist als die Länge der Wälzkörper. Auch die am Außenring gebildeten Laufbahnen sind nicht breiter als die Länge der Wälzkörper.

Im Stand der Technik sind auch Schrägrollenlager mit zwei Reihen von Wälzkörpern bekannt, deren Wälzkörper im Querschnitt konisch sind.

### Aufgabe

Die Herstellungs- und Montagekosten sowie der Wartungsaufwand von mehrreihigen Schrägrollenlagern zum Beispiel in (Wind-)Energieanlagen sollen sinken, und die Belastbarkeit der Schrägrollenlager soll hoch sein.

### Lösung

Bei herkömmlichen Schrägrollen- und Kegelrollenlagern ist das Lagerspiel von vielen Faktoren abhängig ist. So gehen Passungstoleranzen, die Einzelhöhen der Innen- oder Außenringe, die Anpresskraft des Winkelrings und die aufgebrachte Schraubenvorspannung in das Lagerspiel oder die Vorspannung des Wälzlagers ein. Bei der hier vorgestellten Lösung muss das Lagerspiel oder die Lagervorspannung nicht mehr für Schrägrollenlager bei dessen Montage individuell eingestellt werden. Somit entfallen die Fehlermöglichkeiten, welche sich bei herkömmlichen Schrägrollenlagern aus Unsicherheiten des Ist-Maßes der Passung der Toleranzlage der Winkelringe, der axialen Lageraufnahme sowie der Schwankungen in der Schraubenvorspannung ergeben. Ein Unterschied zu herkömmlichen Schrägrollenlagern ist, dass bei dem hier vorgestellten Schrägrollenlager der Innenring oder der Außenring nicht zur Spiel- oder Vorspannungseinstellung geteilt ist und auch nicht aus mindestens zwei oder drei Einzelringen bestehen muss.

Vielmehr hat das hier vorgestellte Schrägrollenlager nur jeweils einen - in axialer Richtung ungeteilten - Innenring und einen - in axialer Richtung ungeteilten - Außenring, zwischen denen zwei oder mehr Laufbahnen für eine Vielzahl von Wälzkörpern ausgebildet sind. Dies lässt die Möglichkeit unberührt, dass der Innenring und/oder der Außenring in Umfangsrichtung segmentiert sind.

Das Schrägrollenlager hat eine Vielzahl von Wälzkörpern, die dazu eingerichtet sind, in Umfangsrichtung des Schrägrollenlagers in ihren jeweiligen Laufbahnen abzurollen. Die jeweiligen Laufbahnen und die Wälzkörper haben annähernd einen einander entsprechenden Querschnitt. Ein die Mittellängsachse enthaltender Querschnitt eines Wälzkörpers hat eine rechteckige Gestalt. Dieser Querschnitt des Wälzkörpers hat zwei - imaginäre - Diagonalen. Dabei ergibt sich aus dem Verhältnis des Durchmessers des Wälzkörpers zu seiner Länge derjenige Winkel, unter dem die Laufbahn der Wälzkörper zur Mittellängsachse des Schrägrollenlagers geneigt ist.

Erfindungsgemäß ist die Laufbahn des Schrägrollenlagers so gegen die Mittellängsachse des Schrägrollenlagers geneigt, dass sich ein Ende der Diagonalen geringfügig oberhalb und das gegenüberliegende Ende der Diagonalen geringfügig unterhalb einer gedachten zylindermantelförmigen Fläche befindet. Erfindungsgemäß ist eine Fläche, auf der die Diagonalen für alle Wälzkörper auf einer Laufbahn des Schrägrollenlagers liegen, eine kegelstumpfmantelförmigen Fläche.

Dies bewirkt eine möglichst vollständige Anlage der Laufflächen der Wälzkörper an der Laufbahn des Schrägrollenlagers. Beim Einsatz längerer Wälzkörper ist deren Laufbahn des Schrägrollenlagers flacher zur Mittellängsachse des Schrägrollenlagers geneigt, bei kürzeren Wälzkörpern entsprechend steiler. Bestimmend ist hierbei das Verhältnis von Durchmesser (an den Enden) zu Länge des Wälzkörpers.

Im Gegensatz zu herkömmlichen Schrägrollenlagern sind bei dem hier vorgestellten Schrägrollenlager die in den Innenring bzw. den Außenring eingearbeiteten Laufbahnen an einer Seitenflanke offen. Im Fall einer X-Anordnung des Schrägrollenlagers haben nur die innenliegende Seitenflanke der in den Innenring eingearbeiteten Laufbahn und die außenliegende Seitenflanke der in den Außenring eingearbeiteten Laufbahn eine jeweilige Schulter, an der eine jeweilige Stirnfläche des Wälzkörpers anliegt. Der außenliegende Seitenrand der in den Innenring eingearbeiteten Laufbahn und der innenliegende Seitenrand der in den Außenring eingearbeiteten Laufbahn überragen bei einer X-Anordnung die jeweilige Stirnfläche des Wälzkörpers in Richtung dessen Längsmittelachse.

Im Fall einer O-Anordnung des Schrägrollenlagers haben nur die außenliegende Seitenflanke der in den Innenring eingearbeiteten Laufbahn und die innenliegende Seitenflanke der in den Außenring eingearbeiteten Laufbahn eine jeweilige Schulter, an der eine jeweilige Stirnfläche des Wälzkörpers anliegt. Der innenliegende Seitenrand der in den Innenring eingearbeiteten Laufbahn und der außenliegende Seitenrand der in den Außenring eingearbeiteten Laufbahn überragen bei einer O-Anordnung die jeweilige Stirnfläche des Wälzkörpers in Richtung dessen Längsmittelachse.

Die Laufbahn ist über ihre gesamte Breite oberflächenvergütet / gehärtet. Eine Pittingbildung mit Eindrücken in der Laufbahn und umgebender Aufwulstung wird durch diese Ausgestaltungen und Maßnahmen zumindest verringert.

Da der Innenring und der Außenring jeweils in Richtung der Mittellängsachse des Schrägrollenlagers ungeteilt sind, hat die hier vorgestellte Bauart eine höhere Steifigkeit. Das Lagerspiel / die Vorspannung ist bereits werksseitig einzustellen. Somit kann das Schrägrollenlager unmittelbar ohne Anpassungsarbeiten mit seiner Anschlusskonstruktion am Innen- und Außenring verschraubt werden. Die Wälzkörper sind in einigen Varianten des hier vorgestellten Schrägrollenlagers mit geeigneten Zwischenstücken oder Käfigsegmenten auf vordefiniertem Abstand zueinander gehalten.

Zur Montage der Wälzkörper zwischen dem Innenring und dem Außenring des Schrägrollenlagers sind für jede Laufbahn durch Füllstopfen verschließbare Füllöffnungen vorgesehen, die radial von der Außenfläche des Außenrings durch den Außenring hindurch bis zur der Laufbahn reichen. Die Füllöffnungen können auch radial von der Innenfläche des Innenrings durch den Innenring hindurch bis zur der Laufbahn reichen. Die Füllöffnungen können auch entlang des Umfangs versetzt angeordnet sein. Die Füllstopfen sind mit Stiften oder geeigneter Verschraubung gesichert.

An dem Schrägrollenlager ebenfalls vorgesehene Wellendichtringe oder andere Dichtungen gegen Fett- oder Schmiermittelverluste sind hier nicht weiter erörtert.

### Kurze Beschreibung der Zeichnung

Ein Schrägrollenlager in seinen Ausgestaltungen und Varianten wird nachstehend unter Bezugnahme auf die Zeichnung näher erläutert.
Fig. 1 zeigt in einer seitlichen schematischen Schnittansicht den schematischen Aufbau eines Schrägrollenlagers gemäß der Erfindung.
Fig. 2a zeigt in einer seitlichen schematischen Perspektivansicht eine Variante für die Orientierung der Wälzkörper eines Schrägrollenlagers welches nicht Teil der Erfindung ist.
Fig. 2b zeigt in einer seitlichen schematischen Perspektivansicht einer Variante für die Orientierung der Wälzkörper des Schrägrollenlagers aus Fig. 1.
Fig. 3 zeigt in einer seitlichen schematischen Schnittansicht den schematischen Aufbau einer Variante des Schrägrollenlagers aus Fig. 1.

### Detaillierte Beschreibung der Zeichnung

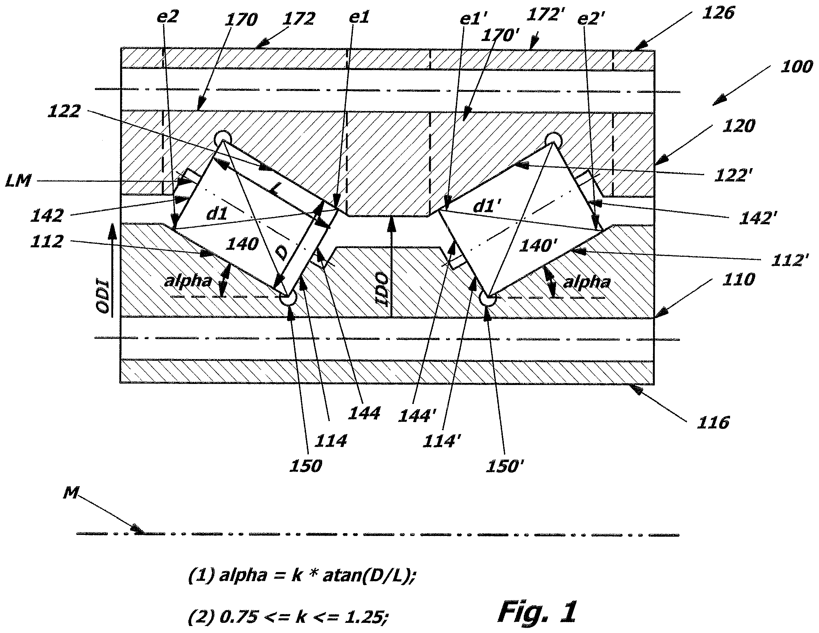

Im Folgenden werden im Zusammenhang mit den Fig. 1 bis Fig. 3 Ausführungsbeispiele des vorliegend offenbarten Schrägrollenlagers näher beschrieben und hinsichtlich ihres Aufbaus und ihrer Funktionsweise erläutert. Zunächst wird im Zusammenhang mit Fig. 1 ein Ausführungsbeispiel eines mehrreihigen, hier zweireihigen, Schrägrollenlagers gemäß einem ersten Ausführungsbeispiel beschrieben.

Fig. 1 zeigt eine Querschnittsdarstellung eines zweireihigen Zylinderrollenlagers 100 als Ausführungsbeispiel eines mehrreihigen Schrägrollenlagers. Das Zylinderrollenlager umfasst einen ersten, inneren Lagerring oder Innenring 110 und einen zweiten, äußeren Lagerring oder Außenring 120. Die beiden Lagerringe 110, 120 sind, bezogen auf eine Mittellängsachse M des Wälz- oder Schrägrollenlagers 100 konzentrisch zueinander angeordnet, wobei der Innenring 110 von dem Außenring 120 umgeben ist. Das Schrägrollenlager 100 weist ferner zwischen dem Innenring 110 und dem Außenring 120 ist eine Mehrzahl kreiszylindrischer erster Wälzkörper 140 in einer ersten Reihe auf. Die ersten Wälzkörper 140 sind hierbei in einem optionalen, nicht weiter veranschaulichten Käfig oder mit Zwischenstücken (Distanzstücken) geführt. Der Käfig kann beispielsweise auch als flexibler Käfig ausgestaltet sein. Fig. 1 zeigt nur einen der ersten Wälzkörper 140. Entsprechend sind zwischen dem Innenring 110 und dem Außenring 120 zweite kegelstumpfförmige Wälzkörper 140' in einer zweiten Reihe angeordnet, die ebenfalls in einem zweiten optionalen Käfig oder mit Zwischenstücken (Distanzstücken) geführt sein können. Fig. 1 zeigt wiederum nur einen der zweiten Wälzkörper 140'.

Zwischen dem einen Innenring 110 und dem einen Außenring 120 sind an jedem der Ringe 110, 120 für jede Reihe der Wälzkörper 140, 140' jeweils eine Laufbahn 112, 122; 112', 122' für die jeweilige Reihe der Wälzkörper 140, 140' ausgebildet. Die Wälzkörper 140, 140' sind dazu eingerichtet, in Umfangsrichtung des Schrägrollenlagers 100 in ihren jeweiligen Laufbahnen 112, 122; 112', 122' abzurollen. Ersichtlich bilden die paarweisen Laufbahnen 112, 122; 112', 122' der ersten und der zweiten Reihen der Wälzkörper 140, 140' und die Wälzkörper 140, 140' zumindest annähernd einen einander entsprechenden, hier etwa rechteckigen Querschnitt.

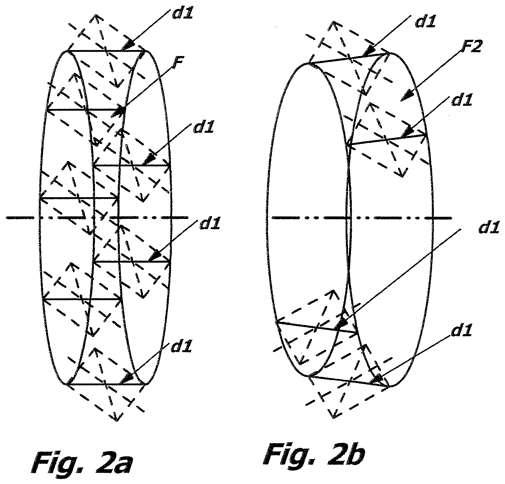

Ein die Mittellängsachse LM enthaltender Querschnitt eines Wälzkörpers 140, 140' hat eine zumindest annähernd viereckige Gestalt und eine imaginäre Diagonale d1 durch den Querschnitt des Wälzkörpers 140, 140'. Bei der Variante nach Fig. 1 ist diese imaginäre Diagonale d1 für alle Wälzkörper 140, 140' auf einer Laufbahn 112, 122; 112', 122' des Schrägrollenlagers 100 wenigstens annähernd auf einer imaginären, zylindermantelförmigen Fläche F angeordnet. Diese imaginäre, zylindermantelförmige Fläche F ist in Fig. 2a veranschaulicht. Ein Verhältnis einer Querabmessung D des Wälzkörpers 140, 140' zu seiner Länge L ist für einen Winkel alpha charakteristisch, unter dem die Laufbahn 112, 122; 112', 122' der Wälzkörper 140, 140' zur Mittellängsachse M des Schrägrollenlagers 100 geneigt ist.

In Varianten des Schrägrollenlagers, bei denen die imaginäre Diagonale d1 für alle Wälzkörper 140, 140' auf einer Laufbahn 112, 122; 112', 122' des Schrägrollenlagers 100 genau auf der imaginären, zylindermantelförmigen Fläche F angeordnet ist, ergibt sich der Winkel alpha aus der Beziehung alpha = k * atan (Querabmessung D des Wälzkörpers / Länge L des Wälzkörpers), wobei k = 1. Die Querabmessung D des Wälzkörpers ist bei Zylinderrollen als Wälzkörper deren Durchmesser. Bei Kegelrollen als Wälzkörper hat der Wälzkörper einen Durchmesser D der großen Stirnfläche des Kegels und einen Durchmesser d der kleinen Stirnfläche des Kegels.

Bei dem Schrägrollenlager 100 in der Variante nach Fig. 1 ist die Laufbahn 112, 122; 112', 122' der Wälzkörper 140, 140' des Schrägrollenlagers 100 genauer gesagt so gegen die Mittellängsachse M des Schrägrollenlagers 100 geneigt, dass sich ein Ende e1, e1' der Diagonalen d1, d1' geringfügig oberhalb und das gegenüberliegende Ende e2, e2' der Diagonalen d1, d1' geringfügig unterhalb der imaginären zylindermantelförmigen Fläche F befindet. In diesem Fall liegen die Diagonalen d1, d1' auf einer kegelstumpfmantelförmigen Fläche F2, wie sie in Fig. 2b veranschaulicht ist. Dabei bestimmt sich der Winkel alpha aus der Beziehung alpha = k * atan (Querabmessung D des Wälzkörpers / Länge L des Wälzkörpers ergibt, wobei 0.75 <= k <= 1.25. In der in Fig. 2b veranschaulichten Variante beträgt der Faktor k = 0.8.

Bei den hier offenbarten Schrägrollenlagern sind die in den Innenring 110 und/ oder den Außenring 120 eingearbeiteten Laufbahnen 112, 122; 112', 122' an einer Seitenflanke offen. Genauer gesagt haben bei dem Schrägrollenlager 100 nach Fig. 1, welche einen Fall einer O-Anordnung des Schrägrollenlagers 100 veranschaulicht, nur eine innenliegende Seitenflanke 114, 114' der in den Innenring 110 eingearbeiteten Laufbahnen 112, 112' und eine außenliegende Seitenflanke 124, 124' der in den Außenring 120 eingearbeiteten Laufbahnen 122, 122' eine jeweilige Schulter aufweisen, an denen eine jeweilige Stirnfläche 142, 144; 142', 144' des jeweiligen Wälzkörpers 140, 140' anliegen. Am Seitenrand der jeweiligen Laufbahnen mit einer Schulter ist im Übergang von der Laufbahn zur Schulter ein Freistich 150, 150' vorgesehen. Die Schultern der jeweiligen Seitenflanken 114, 114'; 124, 124' reichen etwa bis zu einem Drittel der Querabmessung der Stirnflächen des jeweiligen Wälzkörpers 140, 140'.

Ein freiliegender Seitenrand, also ohne jeweilige Seitenflanken 114, 114' der in den Innenring 110 eingearbeiteten Laufbahnen 112, 112' und ein freiliegender Seitenrand, also ohne jeweilige Seitenflanken 124, 124' der in den Außenring 120 eingearbeiteten Laufbahnen 122, 122' überragen die jeweilige Stirnfläche 142, 144; 142', 144' der Wälzkörper 140, 140' in Richtung dessen Längsmittelachse LM.

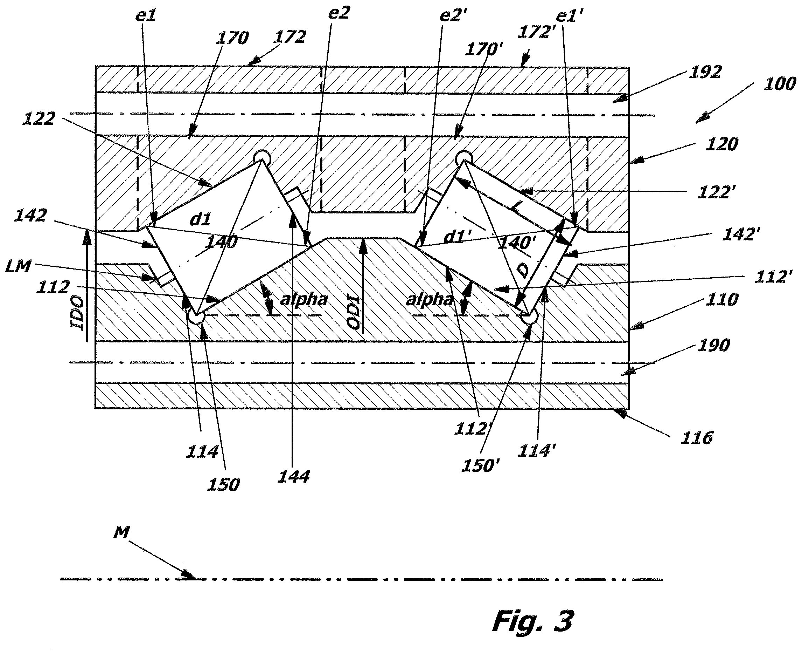

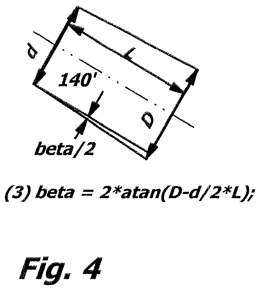

Bei der Variante des Schrägrollenlager 100 nach Fig. 3, das eine X-Anordnung des Schrägrollenlagers 100 veranschaulicht, haben analog nur eine außenliegende Seitenflanke der in den Innenring 110 eingearbeiteten Laufbahn 112, 112' und eine innenliegende Seitenflanke der in den Außenring 120 eingearbeiteten Laufbahn 122, 122' eine jeweilige Schulter, an der eine jeweilige Stirnfläche 142, 144; 142', 144' der Wälzkörper 140, 140' anliegen. Hierbei überragen ein innenliegender Seitenrand der in den Innenring 110,110' eingearbeiteten Laufbahnen 112, 112' und ein außenliegender Seitenrand der in den Außenring 120 eingearbeiteten Laufbahnen 122, 122' die jeweilige Stirnfläche 142, 144; 142', 144' der Wälzkörper 140, 140' in Richtung dessen Längsmittelachse LM.

Die Laufbahnen 112, 112'; 122, 122' sind über ihre gesamte Breite oberflächenvergütet / gehärtet.

Zur Montage der Wälzkörper in das Schrägrollenlager 100 sind durch Füllstopfen 170, 170' verschließbare Füllöffnungen 172, 172' vorgesehen, die radial von einer Außenfläche 126 des Außenrings 120 durch den Außenring 120 hindurch bis zur der jeweiligen Laufbahn 122, 122' reichen oder radial von einer Innenfläche 116 des Innenrings 110 durch den Innenring 110 hindurch bis zur jeweiligen Laufbahn 112, 112' reichen und so dimensioniert sind, dass die Wälzkörper 140, 140' annähernd in ihrer Betriebslage in das Schrägrollenlager 100 einzubringen sind. Ersichtlich haben bei den hier vorgestellten Schrägrollenlagern der Außenring 120 einen kleinsten Innendurchmesser IDO, und der Innenring 110 einen größten Au-βendurchmesser ODI, wobei der kleinste Innendurchmesser IDO des Außenrings 120 größer ist als der größte Außendurchmesser des Innenrings ODI. Die Ringe lassen sich sonst nicht ineinanderschieben.

Bei den hier vorgestellten Schrägrollenlagern haben der Innenring 110 und der Außenring 120 radial orientierte Bohrungen 190, 192 zur Befestigung des Schrägrollenlager an einer Anschlusskonstruktion.

Die vorangehend beschriebenen Varianten des Schrägrollenlagers dienen lediglich dem besseren Verständnis der Struktur, der Funktionsweise und der Eigenschaften des Schrägrollenlagers; sie schränken die Offenbarung nicht etwa auf die Ausführungsbeispiele ein. Die Fig. sind teilweise schematisch, wobei wesentliche Eigenschaften und Effekte zum Teil deutlich vergrößert dargestellt sind, um die Funktionen, Wirkprinzipien, technischen Ausgestaltungen und Merkmale zu verdeutlichen.

Die Erfindung ist definiert durch die angehängten Ansprüche.

## Patentansprüche

1. Mehrreihiges Schrägrollenlager (100) aufweisend
einen in axialer Richtung ungeteilten Innenring (110) und einen in axialer Richtung ungeteilten Außenring (120), zwischen denen zwei oder mehr Laufbahnen (112, 112'; 122, 122') für eine Vielzahl von Wälzkörpern (140, 140') ausgebildet sind, wobei die Wälzkörper (140, 140') dazu eingerichtet sind, in Umfangsrichtung des Schrägrollenlagers (100) in ihren jeweiligen Laufbahnen (112, 112'; 122, 122') abzurollen, und wobei
- die jeweiligen Laufbahnen (112, 112'; 122, 122') und die Wälzkörper (140, 140') zumindest annähernd einen einander entsprechenden Querschnitt aufweisen,
- ein eine Mittellängsachse (LM) eines Wälzkörpers (140, 140') enthaltender Querschnitt des Wälzkörpers (140, 140') eine rechteckige Gestalt und eine imaginäre Diagonale (d1, d1') durch den Querschnitt des Wälzkörpers (140, 140') aufweist, die für alle Wälzkörper (140, 140') auf einer Laufbahn (112, 112'; 122, 122') des Schrägrollenlagers (100) auf einer imaginären Fläche (F2) angeordnet ist, wobei der Wälzkörper (140, 140') eine Länge (L) und eine, sich quer zu seiner Mittellängsachse (LM) erstreckende Querabmessung (D) aufweist, und
- ein Verhältnis der Querabmessung (D) des Wälzkörpers (140, 140') zu seiner Länge (L) für einen Winkel (alpha) charakteristisch ist, unter dem die Laufbahn (112, 112'; 122, 122') der Wälzkörper (140, 140') zur Mittellängsachse (M) des Schrägrollenlagers (100) geneigt ist, wobei
das Verhältnis von der Querabmessung (D) zu der Länge (L) kleiner als 1 ist und die Fläche (F2) kegelstumpfförmig ist,
wobei die in den Innenring (110) und/oder den Außenring (120) eingearbeiteten Laufbahnen (112, 112'; 122, 122') an einer Seitenflanke offen sind,
**dadurch gekennzeichnet, dass**
im Fall einer O-Anordnung des Schrägrollenlagers (100) nur eine innenliegende Seitenflanke der in den Innenring (110) eingearbeiteten Laufbahn und eine außenliegende Seitenflanke der in den Außenring (120) eingearbeiteten Laufbahn eine jeweilige Schulter aufweisen, an denen eine jeweilige Stirnfläche des Wälzkörpers anliegen, und wobei ein außenliegender Seitenrand der in den Innenring (110) eingearbeiteten Laufbahn und ein innenliegender Seitenrand der in den Außenring (120) eingearbeiteten Laufbahn die jeweilige Stirnfläche des Wälzkörpers in Richtung dessen Längsmittelachse (LM) überragen; und
wobei im Fall einer X-Anordnung des Schrägrollenlagers (100) nur eine außenliegende Seitenflanke der in den Innenring (110) eingearbeiteten Laufbahn und eine innenliegende Seitenflanke der in den Außenring (120) eingearbeiteten Laufbahn eine jeweilige Schulter aufweisen, an der eine jeweilige Stirnfläche des Wälzkörpers anliegen, und wobei ein innenliegender Seitenrand der in den Innenring (110) eingearbeiteten Laufbahn und ein außenliegender Seitenrand der in den Außenring (120) eingearbeiteten Laufbahn die jeweilige Stirnfläche des Wälzkörpers in Richtung dessen Längsmittelachse (LM) überragen.

2. Schrägrollenlager (100) nach Anspruch 1, bei dem der Winkel (alpha) sich aus der Beziehung alpha = k * atan (Querabmessung (D) des Wälzkörpers / Länge (L) des Wälzkörpers) ergibt, wobei 0.75 <= k <= 1.25.

3. Schrägrollenlager (100) nach einem der vorhergehenden Ansprüche, wobei zumindest an den jeweiligen offenen Seitenrändern die jeweilige Laufbahn mindestens so breit ist, wie die Wälzkörper (140, 140') lang sind, und wobei die Laufbahn ist über ihre gesamte Breite oberflächenvergütet oder gehärtet ist.

4. Schrägrollenlager (100) nach einem der vorhergehenden Ansprüche, wobei durch Füllstopfen verschließbare Füllöffnungen vorgesehen sind, die radial von einer Außenfläche des Außenrings (120) durch den Außenring (120) hindurch bis zur der jeweiligen Laufbahn reichen oder radial von einer Innenfläche des Innenrings (110) durch den Innenring (110) hindurch bis zur jeweiligen Laufbahn reichen und so dimensioniert sind, dass die Wälzkörper (140, 140') annähernd in ihrer Betriebslage in das Schrägrollenlager (100) einzubringen sind.

5. Schrägrollenlager nach einem der vorhergehenden Ansprüche, wobei der Au-ßenring (120) einen kleinsten Innendurchmesser (IDO) aufweist, und der Innenring (110) einen größten Außendurchmesser (ODI) aufweist, wobei der kleinste Innendurchmesser (IDO) des Außenrings (120) größer ist als der größte Außendurchmesser des Innenrings (ODI).

6. Schrägrollenlager nach einem der vorhergehenden Ansprüche, wobei der Innenring (110) und/oder der Außenring (120) radial orientierte Bohrungen (190, 192) zur Befestigung des Schrägrollenlager an einer Anschlusskonstruktion aufweist.

## Claims

1. Multi-row angular contact roller bearing (100) comprising
an inner ring (110) which is not divided in the axial direction and an outer ring (120) which is not divided in the axial direction, between which two or more raceways (112, 112'; 122, 122') for a multiplicity of rolling elements (140, 140') are formed, the rolling elements (140, 140') being adapted to roll in their respective raceways (112, 112'; 122, 122') in the circumferential direction of the angular contact roller bearing (100), and wherein
- the respective raceways (112, 112'; 122, 122') and the rolling elements (140, 140') comprise at least approximately a cross section corresponding to one another,
- a cross-section of the rolling element (140, 140') containing a central longitudinal axis (LM) of a rolling element (140, 140') has a rectangular shape and an imaginary diagonal (d1, d1') through the cross-section of the rolling element (140, 140'), which diagonal (d1, d1') is identical for all the rolling elements (140, 140') on a raceway (112, 112'; 122, 122') of the angular contact roller bearing (100); 122, 122') of the angular contact roller bearing (100) on an imaginary surface (F2), the rolling element (140, 140') having a length (L) and a transverse dimension (D) extending transversely to its central longitudinal axis (LM), and
- a ratio of the transverse dimension (D) of the rolling element (140, 140') to its length (L) is characteristic of an angle (alpha) at which the raceway112, 112'; 122, 122') of the rolling elements (140, 140') is inclined to the central longitudinal axis (M) of the angular contact roller bearing (100),
wherein the ratio of the transverse dimension (D) to the length (L) is less than 1 and the surface (F2) is frustoconical,
wherein the raceways (112, 112'; 122, 122') machined into the inner ring (110) and/or the outer ring (120) are open on one side flank,
**characterised in that**,
in the case of an O arrangement of the angular contact roller bearing (100), only an inner lateral flank of the raceway machined into the inner ring (110)-and an outer lateral flank of the raceway machined intoouter ring (120) have a respective shoulder, against which a respective end face of the rolling element rests, and wherein an outer side edge of the raceway machined into the inner ring (110) and an inner side edge of the raceway machined into the outer ring (120) project beyond the respective end face of the rolling element in the direction of its longitudinal centre axis (LM); and wherein,
in the case of an X arrangement of the angular contact roller bearing (100), only an outer lateral flank of the raceway machined into the inner ring (110) and an inner lateral flank of the raceway machined into the outer ring (120) each have a respective shoulder against which a respective end face of the rolling element bears, and wherein an inner lateral edge of the raceway machined into the inner ring (110) and an outer lateral edge of the raceway machined into the outer ring (120) project beyond the respective end face of the rolling element in the direction of the longitudinal centre axis (LM) thereof.

2. Angular contact roller bearing (100) according to claim 1, in which the angle (alpha) results from the relationship alpha = k * atan (transverse dimension (D) of the rolling element / length (L) of the rolling element), where 0.75 <= k <= 1.25.

3. Angular contact roller bearing (100) according to one of the preceding claims, wherein at least at the respective open side edges the respective raceway is - at least as wide as the rolling elements (140, 140') are long, and wherein the raceway is surface-tempered or hardened over its entire width.

4. An angular contact roller bearing (100) according to one of the preceding claims, wherein filling openings are provided which can be closed by filling plugs and which extend radially from an outer surface of the outer ring (120) through the outer ring (120) to the respective raceway or extend radially from an inner surface of the inner ring (110) through the inner ring (110) to the respective raceway and are dimensioned in such a way that the rolling elements (140, 140') can be introduced into the angular contact roller bearing (100) approximately in their operating position.

5. An angular contact roller bearing according to any one of the preceding claims, wherein the outer ring (120) has a smallest inner diameter (IDO) and the inner ring (110) has a largest outer diameter (ODI), wherein the smallest inner diameter (IDO) of the outer ring (120) is larger than the largest outer diameter of the inner ring (ODI).

6. An angular contact roller bearing according to one of the preceding claims, wherein the innerring (110) and/or the outer ring (120) has radially oriented bores (190, 192) for fastening the angular contact roller bearing to a connection structure.

## Revendications

1. Roulement à rouleaux à contact angulaire à plusieurs rangées (100) comprenant
une bague intérieure (110) qui n'est pas divisée dans la direction axiale et une bague extérieure (120) qui n'est pas divisée dans la direction axiale, entre lesquelles sont formées deux ou plusieurs pistes de roulement (112, 112'; 122, 122') pour une pluralité d'éléments de roulement (140, 140'), les éléments de roulement (140, 140') étant mis en place pour rouler dans leurs pistes de roulement respectives (112, 112'; 122, 122') dans la direction circonférentielle du roulement à rouleaux à contact oblique (100), et
- les pistes de roulement respectives (112, 112'; 122, 122') et les éléments de roulement (140, 140') ayant au moins approximativement une section transversale correspondant les uns aux autres,
- un axe longitudinal central (112, 112'; 122, 122') étant formé entre les pistes de roulement (112, 112'; 122, 122');
une section transversale de l'élément de roulement (140, 140') contenant un axe longitudinal central (LM) d'un élément de roulement (140, 140') a une forme rectangulaire et une diagonale imaginaire (d1, d1') à travers la section transversale de l'élément de roulement (140, 140'), laquelle diagonale (d1, d1') est identique pour tous les éléments de roulement (140, 140') sur un chemin de roulement (112, 112' ; 122, 122') du roulement à rouleaux à contact oblique (100) ; 122, 122') du roulement à rouleaux à contact angulaire (100) sur une surface imaginaire (F2), l'élément roulant (140, 140') ayant une longueur (L) et une dimension transversale (D) s'étendant transversalement à son axe longitudinal central (LM), et
- un rapport entre la dimension transversale (D) de l'élément de roulement (140, 140') et sa longueur (L) est caractéristique d'un angle (alpha) auquel le chemin de roulement(112, 112' ; 122, 122') des éléments de roulement (140, 140') est incliné par rapport à l'axe longitudinal central (M) du roulement à rouleaux à contact oblique (100),
dans lequel le rapport entre la dimension transversale (D) et la longueur (L) est inférieur à 1 et la surface (F2) est tronconique,
dans lequel les chemins de roulement (112, 112' ; 122, 122') usinés dans la bague intérieure (110) et/ou la bague extérieure (120) sont ouverts sur un flanc latéral,
**caractérisé en ce que**, dans le cas d'une disposition en O du roulement à rouleaux à contact oblique (100), seul un flanc latéral intérieur de la piste de roulement usinée dans la bague intérieure (110) et un flanc latéral extérieur de la piste de roulement usinée dans la bague extérieure (120) présentent un épaulement respectif, contre laquelle une face d'extrémité respective de l'élément de roulement repose, et dans lequel un bord latéral extérieur du chemin de roulement usiné dans la bague intérieure (110) et un bord latéral intérieur du chemin de roulement usiné dans la bague extérieure (120) font saillie au-delà de la face d'extrémité respective de l'élément de roulement dans la direction de son axe central longitudinal (LM) ; et
dans lequel, dans le cas d'une disposition en X du roulement à rouleaux à contact angulaire (100), seul un flanc latéral extérieur de la piste de roulement usinée dans la bague intérieure (110) et un flanc latéral intérieur de la piste de roulement usinée dans la bague extérieure (120) ont un épaulement respectif contre lequel une face d'extrémité respective de l'élément roulant s'appuie, et dans lequel un bord latéral intérieur du chemin de roulement usiné dans la bague intérieure (110) et un bord latéral extérieur du chemin de roulement usiné dans la bague extérieure (120) font saillie au-delà de la face d'extrémité respective de l'élément de roulement dans la direction de l'axe central longitudinal (LM) de celui-ci.

2. Roulement à rouleaux à contact oblique (100) selon la revendication 1, dans lequel l'angle (alpha) résulte de la relation alpha = k * atan (dimension transversale (D) de l'élément roulant / longueur (L) de l'élément roulant), où 0,75 <= k <= 1,25.

3. Roulement à rouleaux à contact oblique (100) selon l'une des revendications précédentes, dans lequel, au moins au niveau des bords latéraux ouverts respectifs, le chemin de roulement respectif est au moins aussi large que les éléments de roulement (140, 140') sont longs, et dans lequel le chemin de roulement est trempé en surface ou durci sur toute sa largeur.

4. Roulement à rouleaux à contact oblique (100) selon l'une des revendications précédentes, dans lequel il est prévu des ouvertures de remplissage qui peuvent être fermées par des bouchons de remplissage et qui s'étendent radialement depuis une surface extérieure de la bague extérieure (120) à travers la bague extérieure (120) jusqu'à la piste de roulement respective ou s'étendent radialement depuis une surface intérieure de la bague intérieure (110) à travers la bague intérieure (110) jusqu'à la piste de roulement respective et sont dimensionnées de telle sorte que les éléments roulants (140, 140') peuvent être introduits dans le roulement à rouleaux à contact oblique (100) approximativement dans leur position de fonctionnement.

5. Roulement à rouleaux à contact angulaire selon l'une quelconque des revendications précédentes, dans lequel la bague extérieure (120) a un diamètre intérieur le plus petit (IDO) et la bague intérieure (110) a un diamètre extérieur le plus grand (ODI), dans lequel le diamètre intérieur le plus petit (IDO) de la bague extérieure (120) est plus grand que le diamètre extérieur le plus grand de la bague intérieure (ODI).

6. Roulement à rouleaux à contact angulaire selon l'une quelconque des revendications précédentes, dans lequel la bague intérieure(110) et/ou la bague extérieure (120) présente des alésages (190, 192) orientés radialement pour fixer le roulement à rouleaux à contact angulaire à une structure de connexion.
